# EUROPÄISCHE PATENTANMELDUNG

(11) **EP 2 624 016 A1**
(43) Veröffentlichungstag der Anmeldung: **07.08.2013**
(21) Anmeldenummer: 12197576.7
(22) Anmeldetag: 17.12.2012
(51) Int. Cl.: G01V 8/10, G01V 13/00

(54) **Sensor zur Erfassung eines Objekts**

(30) Priorität: 06.02.2012 DE 102012100950
(71) Anmelder: SICK AG, 79183 Waldkirch (DE)
(72) Erfinder: Mächerlein, Stephan, 79206 Breisach (DE); Steinbach, Ingo, 79194 Gundelfingen (DE)
(74) Vertreter: Hehl, Ulrich

(57) **Zusammenfassung**

Es wird ein Sensor (10) zur Erfassung eines Objekts (20) in einem Überwachungsbereich (16) angegeben, der eine Auswertungseinheit (18) zum Erkennen von Objekten (20) anhand von Sensorsignalen, einen Schaltausgang (22) zur Ausgabe eines Schaltsignals, insbesondere eines Objektfeststellungssignals, in Abhängigkeit von der Erkennung von Objekten (20) und einen Teach-Auslöser (24) aufweist, dessen Betätigung eine Einlernphase zum Setzen von mindestens einem Betriebsparameter der Auswertungseinheit (18) auslöst, wobei von der Auswertungseinheit (18) auf dem Schaltausgang (22) ein Rückmeldungssignal über ein erfolgreiches Setzen des Betriebsparameters in der Einlernphase ausgebbar ist. Dabei umfasst das Rückmeldungssignal eine Umschaltung des Schaltausgangs (22) für eine vorgegebene Zeitdauer.

## Beschreibung

Die Erfindung betrifft einen Sensor zur Erfassung eines Objekts und ein Verfahren zur Rückmeldung über den Erfolg einer Einlernphase nach dem Oberbegriff von Anspruch 1 beziehungsweise 10.

Sensoren zur Objekterfassung werden in zahlreichen Anwendungen eingesetzt, und es gibt eine Vielzahl von verschiedenen Sensorprinzipien. Dazu zählen etwa optische Sensoren, Mikrowellensensoren, Ultraschallsensoren, induktive Sensoren, kapazitive Sensoren oder magnetische Sensoren. Diese Sensoren haben häufig die Aufgabe zu erkennen, ob sich in einem Überwachungsbereich in Objekt befindet oder nicht. Ein typisches Beispiel für einen solchen Sensor ist eine Lichtschranke, die ein Objekt anhand einer Unterbrechung ihres Lichtstrahls erkennt. An einem Schaltausgang gibt ein solcher Sensor ein Schaltsignal aus, das als binäres Objektfeststellungssignal den einen binären Zustand bei Anwesenheit und den anderen binären Zustand bei Abwesenheit eines Objekts im Überwachungsbereich annimmt.

Zur Anpassung an die Umgebungsbedingungen oder die gewünschte Anwendung ist bekannt, Sensoren mit einer sogenannten Teach-Funktion auszurüsten. Damit werden bei Inbetriebnahme oder einer Umstellung Betriebsparameter des Sensors gesetzt. Dies wird als Einlernen (Teach) bezeichnet, weil der Sensor häufig selbst daran beteiligt ist, nach entsprechender Aufforderung den notwendigen Parameterwert zu bestimmen, beispielsweise bei Anpassung einer Schaltschwelle eines optischen Sensors in Abhängigkeit von einem Zielobjekt oder dem Umgebungslicht.

Es kann nun nur sehr schwer festgestellt werden, ob eine Parametrierung des Sensors erfolgreich war oder nicht. Obwohl bekannt ist, die Teach-Anforderung von einer Steuerung über einen Teach- oder Multifunktionseingang elektronisch an den Sensor zu übermitteln, gibt es nämlich keinerlei Rückmeldung, weil es sich um einen reinen Eingang und nicht um eine Kommunikationsschnittstelle handelt. Den Teach-Eingang als Kommunikationsschnittstelle vorzusehen ist zwar möglich, treibt aber die Kosten gerade bei relativ einfachen Sensoren in die Höhe.

Eine andere herkömmliche Lösung besteht in einer optischen Rückmeldung am Gerät, die jedoch dementsprechend nicht automatisch von einer angeschlossenen Steuerung ausgewertet werden kann und die auch je nach Einbausituation selbst für das Bedienpersonal nicht mehr erkennbar ist.

Aus der DE 198 42 351 C1 ist ein Sensor zum Erfassung von Gegenständen bekannt, an den zum Parametrieren eine Bedieneinheit angeschlossen werden kann. Der Sensor gibt dabei eine Rückmeldung, ob die Parametrierung erfolgreich war. In einer Ausführungsform erfolgt die bidirektionale Kommunikation zur Parametrierung einerseits und für die Rückmeldung andererseits allein über den Schaltausgang. Die Parameter und die Rückmeldung werden dabei auf das eigentliche Schaltsignal aufmoduliert. Somit ist hier der Schaltausgang als Kommunikationsschnittstelle weitergebildet, wofür ebenso wie bei einem zur Kommunikationsschnittstelle ausgebauten Teach-Eingang relativ aufwändige Schaltungsbausteine benötigt werden. Mit der Funktionalität eines einfachen Schaltausgangs, der lediglich die Ausgabe eines binären Schaltsignals unterstützt, ist eine zusätzliche Modulation auf das Schaltsignal wie in der DE 198 42 351 C1 nicht möglich.

Es ist daher Aufgabe der Erfindung, in einem gattungsgemäßen Sensor auf einfache Weise eine Rückmeldung über den Erfolg der Einlernphase auszugeben.

Diese Aufgabe wird durch einen Sensor zur Erfassung eines Objekts nach Anspruch 1 und ein Verfahren zur Rückmeldung über den Erfolg einer Einlernphase nach Anspruch 10 gelöst. Dabei geht die Erfindung von dem Grundgedanken aus, den Schaltausgang für ein Feedback über den Erfolg der Einlernphase zu nutzen. Anstatt nun eine eigene Kommunikationsfunktionalität zu ergänzen, etwa eine serielle Schnittstelle oder eine I/O-Link-Schnittstelle aus dem Schaltausgang zu machen, wird das Rückmeldungssignal über ein entsprechendes vordefiniertes Zeitverhalten des Schaltsignals ausgegeben. Dazu wird der Schaltausgang für eine vordefinierte Dauer umgeschaltet, also von Low auf High gesetzt oder umgekehrt. Für eine weitergehende Modulation ist der Schaltausgang und seine Ansteuerung nicht ausgelegt, kann also andere Zustände außer dem binären Low und High nicht erzeugen. Um mit diesen einfachen Mitteln auszukommen, überträgt das Rückmeldungssignal vorzugsweise nur ein Bit an Information, das nur zwei Zustände für eine erfolgreiche Parametrierung oder einen Parametrierungsfehler enthält. Prinzipiell könnte man durch mehrfaches Umschalten beziehungsweise unterschiedliches Zeitverhalten zwischen den Umschaltungen auch eine mächtigere Codierung umsetzen, aber das ist für das gesuchte einfache Teach-Feedback nicht erforderlich.

Die Erfindung hat den Vorteil, dass die Rückmeldung auf bereits vorhandenen Anschlüssen ausgegeben werden kann. Es ist nicht erforderlich, einen der Ausgänge des Sensors zu einer Kommunikationsschnittstelle aufzurüsten. Zumeist ist auch der Schaltausgang ohnehin an eine Steuerung angeschlossen. Diese kann nun auf einfache Weise die Umschaltung erkennen, mit welcher der Sensor seine Rückmeldung über den Erfolg der Einschaltphase ausgibt. Diese automatische Auswertbarkeit ist deutlich komfortabler als lediglich eine optische Rückmeldung, die ein Benutzer prüfen muss und dies überdies je nach Einbausituation gar nicht erkennen kann. Die Erfindung bietet eine ausgesprochen kostengünstige Lösung, weil weder zusätzliche Hardwareanforderungen innerhalb des Sensors gestellt werden, noch eine zusätzliche Verdrahtung erforderlich ist.

Der Teach-Auslöser ist bevorzugt als Eingang für ein Teach-Signal ausgebildet. So kann eine Steuerung an diesen oft als Multifunktionseingang angebunden und der Teach-Vorgang von der Steuerung ausgelöst werden. Alternativ ist ein Betätigungselement, beispielsweise ein Teachknopf, an dem Sensor ausgebildet, beispielsweise an dessen Gehäuse, einem Aufsatz oder einer Zuleitung.

Die vorgegebene Zeitdauer codiert bevorzugt durch ihre Länge ein erfolgreiches Setzen des Betriebsparameters oder ein nicht erfolgtes Setzen des Betriebsparameters. Der Informationsgehalt des Rückmeldungssignals, vorzugsweise nur ein Bit über den Erfolg oder Nichterfolg der Einlernphase, ist somit in der Dauer der Umschaltung codiert, was leicht in dem Sensor zu erzeugen und ebenso leicht mit minimalen Fehlerquellen in einer angeschlossenen Steuerung auszuwerten ist. Alternativ könnte man daran denken, den Informationsgehalt über die Anzahl der Umschaltungen zu codieren, oder über eine Mischung aus Anzahl von Umschaltungen und deren jeweiliger variabler Dauer. Dieser Aufwand ist aber für die Übertragung nur eines Bits gar nicht erforderlich.

Das Rückmeldungssignal umfasst bevorzugt eine Initialisierung, um den Schaltausgang vor der eigentlichen Rückmeldung ein weiteres Mal umzuschalten. Das dient der eindeutigen Erkennung des Rückmeldungssignals und der Synchronisierung, damit eine an den Schaltausgang angeschlossene Steuerung das Rückmeldungssignal anhand der vorgegebenen Zeitdauer richtig entschlüsselt.

Die Auswertungseinheit ist bevorzugt dafür ausgebildet, auf eine Betätigung des Teach-Auslösers hin den Schaltausgang auf einen definierten Wert zu setzen. Das Rückmeldungssignal wird also stets auf der gleichen Basis ausgegeben und ist so besser auszulesen.

Die Auswertungseinheit ist bevorzugt dafür ausgebildet, vor dem Setzen des Schaltausgangs auf einen definierten Wert den ursprünglichen Schaltzustand zu speichern und nach Abschluss des Rückmeldungssignals den Schaltausgang auf den ursprünglichen Schaltzustand zurückzusetzen. So wird der Vorteil erreicht, dass das Rückmeldungssignal stets von der gleichen Basis ausgeht, zugleich der Sensor aber nach Abschluss der Einlernphase wieder den richtigen, zuvor gemerkten Schaltzustand ausgibt.

Der mindestens eine Betriebsparameter umfasst bevorzugt eine Schaltschwelle, mit welcher die Auswertungseinheit das Sensorsignal bewertet, um das Schaltsignal zu bestimmen. Eine solche Schaltschwelle ist für den Betrieb besonders wichtig, und sie wird häufig durch einen Einlernvorgang zu setzen sein, weil der passende Wert der Schaltschwelle oft von den konkreten Umgebungsbedingungen abhängt.

Der Sensor weist bevorzugt einen optischen oder akustischen Signalgeber auf, um parallel zur Ausgabe des Rückmeldungssignals auf dem Schaltausgang eine Rückmeldung über ein erfolgreiches Setzen des Betriebsparameters auf dem Signalgeber auszugeben. So bleibt die herkömmliche, dem Benutzer direkt ersichtliche Rückmeldung, etwa mittels einer LED oder eines Pieptons, neben dem elektrisch auswertbaren Rückmeldungssignal erhalten.

Der Sensor ist bevorzugt ein optoelektronischer Sensor mit einem Lichtempfänger, wobei die Sensorsignale die Empfangssignale des Lichtempfängers sind. Dabei sind diverse Sensortypen denkbar, seien es passive Sensoren ohne eigene Lichtquelle oder aktive Sensoren mit eigenem Lichtsender, Lichtschranken oder tastende Systeme, Distanzmesser oder Scanner oder sonstige an sich bekannte optoelektronische Sensoren.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Blockdarstellung eines Sensors mit Teach-Funktion; und
- Fig. 2: eine beispielhafte Darstellung der Signalverläufe zur Rückmeldung eines Erfolgs oder Misserfolgs eines Einlernvorgangs in einem Sensor.

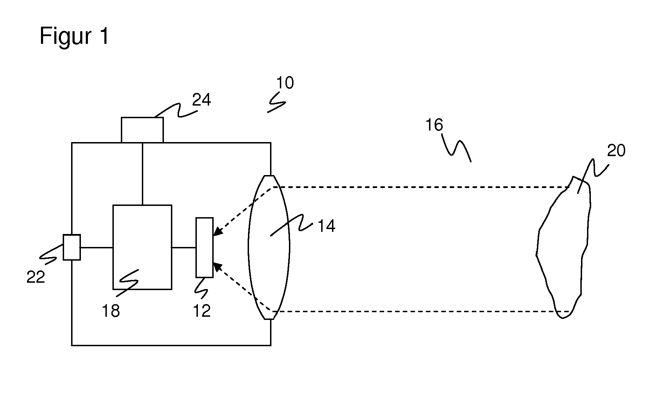

Figur 1 zeigt den Aufbau eines einfachen optoelektronischen Sensors 10. Dieser Sensor 10 ist als stellvertretendes Beispiel gewählt, die Erfindung könnte ebenso anhand eines der zahlreichen anderen einleitend genannten oder sonst bekannten Sensoren beschrieben werden.

Der Sensor 10 weist einen Lichtempfänger 12 auf, um über eine Empfangsoptik 14 Licht aus einem Überwachungsbereich 16 zu empfangen und in ein elektrisches Signal zu wandeln. Eine Auswertungseinheit 18 ist mit dem Lichtempfänger 12 verbunden und wertet das elektrische Signal aus, um festzustellen, ob sich in dem Überwachungsbereich 16 ein Objekt 20 befindet oder nicht. Dementsprechend gibt die Auswertungseinheit 18 über einen Schaltausgang 22 ein binäres Objektfeststellungssignal aus. Eine an den Schaltausgang 22 angeschlossene externe Steuerung wertet das Objektfeststellungssignal aus und steuert dementsprechend andere angeschlossene Geräte.

Um Betriebsparameter des Sensors 10 einzustellen, ist ein Teach-Eingang 24 vorgesehen, über den eine Einlernphase ausgelöst werden kann. Der Teach-Eingang 24 ist ebenfalls an die externe Steuerung angeschlossen, oder alternativ ist ein Teach-Knopf vorgesehen, mit dem die Einlernphase von Hand ausgelöst wird. In der Einlernphase wird beispielsweise eine Schaltschwelle für die Auswertungseinheit 18 eingelernt, die festlegt, bei welchem Intensitätspegel der Schaltausgang 22 zur Erkennung von Objekten 18 zwischen seinen beiden Schaltzuständen wechseln soll. Alternativ können aber auch andere Betriebsparameter eingelernt werden, beispielsweise ein Minimum beziehungsweise Maximum eines Analogausgangs, etwa von 4mA bis 20mA oder von 0V bis 10V.

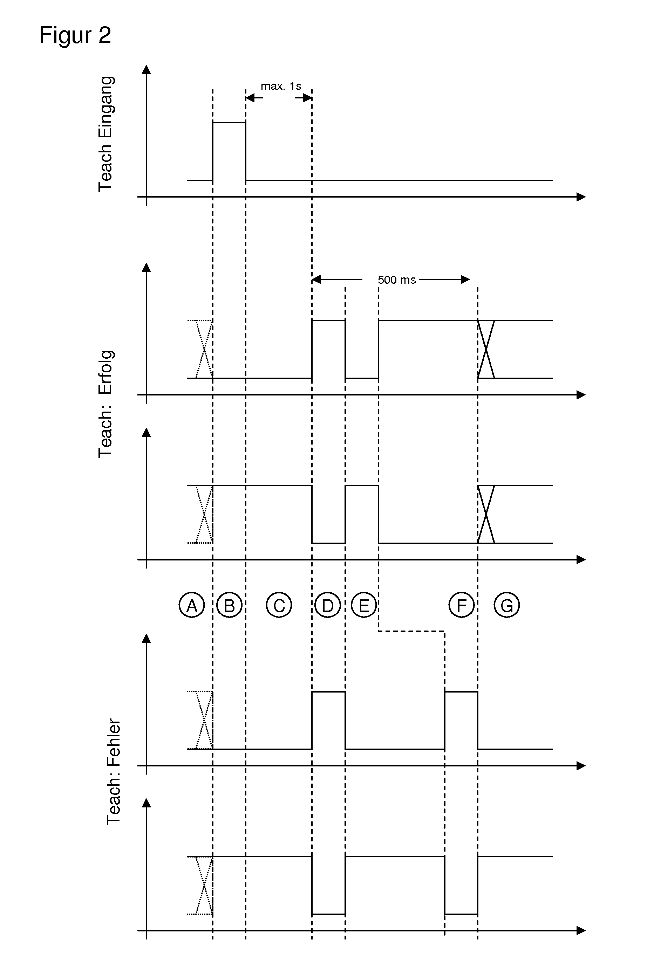

Da sich die Auswirkung des Einlernens nur in Ausnahmefällen unmittelbar zeigt, ist die Auswertungseinheit dafür ausgebildet, in einer anhand der Figur 2 noch zu beschreibenden Weise auf dem Schaltausgang 22 ein Rückmeldungssignal auszugeben, welches meldet, ob der Einlernvorgang erfolgreich war und die Betriebsparameter eingestellt werden konnten oder nicht. Dieses Rückmeldungssignal, und damit der Parametrierungserfolg oder -misserfolg, kann von einer angeschlossenen externen Steuerung ausgewertet werden, um gegebenenfalls weitere Maßnahmen einzuleiten. Parallel dazu kann diese Rückmeldung auch über eine nicht dargestellte LED oder einen Piepton an den Benutzer ausgegeben werden.

Figur 2 zeigt beispielhafte Signalverläufe für das Rückmeldungssignal, die nach einer Parametrierung über die an den Teach-Eingang 24 angeschlossene Teach- oder Multifunktionsleitung auf dem Schaltausgang 22 ausgegeben werden. Im obersten Teil ist ein Signal für eine Teach-Anforderung an dem Teach-Eingang 24 gezeigt. Die weiteren Teile der Figur 2 zeigen von oben nach unten das Rückmeldungssignal für eine erfolgreiche Parametrierung, für eine erfolgreiche Parametrierung bei invertiertem Schaltausgang 22, für einen Parametrierungsfehler und für einen Parametrierungsfehler bei invertiertem Schaltausgang 22.

Etwa in der Mitte der Figur sind mit Buchstaben verschiedene Phasen der Rückmeldungssignale bezeichnet, die nun erläutert werden. Zu Beginn bei "A", noch vor Auslösen des Teach-Vorgangs, befindet sich der Schaltausgang 22 je nach letzter Objektfeststellung in der Auswertungseinheit 18 in seinem High-Zustand oder seinem Low-Zustand.

Mit der steigenden Flanke der Teach-Anforderung wird bei "B" dieser zuletzt aktive Schaltzustand sowie der Zustand des Schaltausgangs 22 gespeichert und gehalten, als "Low" oder "High".

Während eines Zeitintervalls "C" findet der eigentliche Teach-Vorgang des Sensors 10 statt, der üblicherweise nach einer festen Zeitspanne von beispielsweise einer Sekunde abgeschlossen ist, und währenddessen verharrt der Schaltausgang 22 in dem Grundzustand der Phase "B".

Mit der Phase "D" beginnt das eigentliche Rückmeldungssignal mit einer Invertierung für eine feste Zeitdauer von beispielsweise 100ms. Dies zeigt an, dass jetzt das Ergebnis folgt.

In der Phase "E" erfolgt dann nochmals eine Umschaltung, die in ihrer Dauer codiert, ob die Einlernphase erfolgreich abgelaufen ist. In dem Beispiel der Figur 3 ist hierfür eine Dauer von 100ms für "OK" und eine Dauer von 300ms für "Fehler" gewählt.

Mit der Phase "F" endet nach beispielsweise 500ms das Rückmeldungssignal. Der Schaltausgang 22 wird daraufhin zum Abschluss in einer Phase "G" entweder auf den früheren, in Phase "B" gespeicherten Schaltzustand zurückgesetzt, oder es erfolgt sofort eine Bestimmung eines aktuellen Schaltzustands in der Auswertungseinheit 18 mit den in der Einlernphase neu gesetzten Betriebsparametern, und dieser aktuelle Schaltzustand wird ausgegeben.

Die in Figur 2 dargestellten Zeitverläufe des Rückmeldungssignals sind als Beispiele zu verstehen. Variationen in der Anzahl der Umschaltungen und den Dauern zwischen den Umschaltungen sind von der Erfindung ebenfalls umfasst. Dabei reicht eine kleine Anzahl von vollständigen Umschaltungen ohne aufmoduliertes Signal mit wenigen definierten Dauern zwischen den Umschaltungen für die Rückmeldung aus.

## Patentansprüche

1. Sensor (10) zur Erfassung eines Objekts (20) in einem Überwachungsbereich (16), der eine Auswertungseinheit (18) zum Erkennen von Objekten (20) anhand von Sensorsignalen, einen Schaltausgang (22) zur Ausgabe eines Schaltsignals, insbesondere eines Objektfeststellungssignals, in Abhängigkeit von der Erkennung von Objekten (20) und einen Teach-Auslöser (24) aufweist, dessen Betätigung eine Einlernphase zum Setzen von mindestens einem Betriebsparameter der Auswertungseinheit (18) auslöst, wobei von der Auswertungseinheit (18) auf dem Schaltausgang (22) ein Rückmeldungssignal über ein erfolgreiches Setzen des Betriebsparameters in der Einlernphase ausgebbar ist, **dadurch gekennzeichnet,**
**dass** das Rückmeldungssignal eine Umschaltung des Schaltausgangs (22) für eine vorgegebene Zeitdauer umfasst.

2. Sensor (10) nach Anspruch 1,
wobei der Teach-Auslöser (24) als Eingang für ein Teach-Signal oder als Betätigungselement an dem Sensor (10) ausgebildet ist.

3. Sensor (10) nach Anspruch 1 oder 2,
wobei die vorgegebene Zeitdauer durch ihre Länge ein erfolgreiches Setzen des Betriebsparameters oder ein nicht erfolgtes Setzen des Betriebsparameters codiert.

4. Sensor (10) nach einem der vorhergehenden Ansprüche,
wobei das Rückmeldungssignal eine Initialisierung umfasst, um den Schaltausgang (22) vor der eigentlichen Rückmeldung ein weiteres Mal umzuschalten.

5. Sensor (10) nach einem der vorhergehenden Ansprüche,
wobei die Auswertungseinheit (18) dafür ausgebildet ist, auf eine Betätigung des Teach-Auslösers (24) hin den Schaltausgang (22) auf einen definierten Wert zu setzen.

6. Sensor (10) nach Anspruch 5,
wobei die Auswertungseinheit (18) dafür ausgebildet ist, vor dem Setzen des Schaltausgangs (22) auf einen definierten Wert den ursprünglichen Schaltzustand zu speichern und den Schaltausgang (22) nach Abschluss des Rückmeldungssignals auf den ursprünglichen Schaltzustand zurückzusetzen.

7. Sensor (10) nach einem der vorhergehenden Ansprüche,
wobei der mindestens eine Betriebsparameter eine Schaltschwelle umfasst, mit welcher die Auswertungseinheit (18) das Sensorsignal bewertet, um das Schaltsignal zu bestimmen.

8. Sensor (10) nach einem der vorhergehenden Ansprüche,
der einen optischen oder akustischen Signalgeber aufweist, um parallel zur Ausgabe des Rückmeldungssignals auf dem Schaltausgang (22) eine Rückmeldung über ein erfolgreiches Setzen des Betriebsparameters auf dem Signalgeber auszugeben.

9. Sensor (10) nach einem der vorhergehenden Ansprüche,
der ein optoelektronischer Sensor mit einem Lichtempfänger (12) ist, und wobei die Sensorsignale die Empfangssignale des Lichtempfängers (12) sind.

10. Verfahren zur Rückmeldung über den Erfolg einer Einlernphase zum Setzen mindestens eines Betriebsparameters eines Sensors (10), bei dem die Einlernphase durch Betätigen eines Teach-Auslösers (24) eingeleitet wird und auf einem Schaltausgang (22) des Sensors (10) ein Rückmeldungssignal ausgegeben wird, ob der Betriebsparameter in der Einlernphase erfolgreich gesetzt werden konnte,
**dadurch gekennzeichnet,**
**dass** das Rückmeldungssignal eine Umschaltung des Schaltausgangs (22) für eine vorgegebene Zeitdauer umfasst.
